# EUROPEAN PATENT APPLICATION

(11) **EP 4 589 668 A1**
(43) Date of publication of application: **23.07.2025**
(21) Application number: 23864993.3
(22) Date of filing: 01.06.2023
(51) Int. Cl.: H01M 4/02, H01G 11/26, H01G 11/70, H01G 11/74, H01M 4/13, H01M 4/70, H01M 10/04, H01M 10/052, H01M 10/0587, H01M 50/531, H01M 50/559

(54) **ELECTRODE PLATE FOR POWER STORAGE DEVICE, AND POWER STORAGE DEVICE**

(30) Priority: 15.09.2022 JP 2022147272
(71) Applicant: Panasonic Energy Co., Ltd., Osaka 570-8511 (JP)
(72) Inventor: FUKUTOMI, Yuta, Kadoma-shi, Osaka 570-0057 (JP); SATO, Eisuke, Kadoma-shi, Osaka 570-0057 (JP); HAYASHI, Noritaka, Kadoma-shi, Osaka 570-0057 (JP)
(74) Representative: Eisenführ Speiser
(86) International application number: PCT/JP2023/020505
(87) International publication number: WO 2024/057629

(57) **Abstract**

A disclosed electrode plate 21 for power storage device use includes an elongated sheet-shaped current collector 22 having a first main surface 23 and a second main surface 25, and a first active material layer 27 provided on the first main surface 23. The first main surface 23 has at least one first uncoated portion 24 located at one end of the current collector 22 in the widthwise direction, and on which the first active material layer 27 is not provided. The first uncoated portion 24 has a first longitudinal edge 24a coinciding with a part of the outer edge of the current collector 22, paired first widthwise edges 24b extending in the widthwise direction from the endpoints of the first longitudinal edges 24a, and a first connection edge 24c connecting the endpoints of the paired first widthwise edges 24b. Half or more of the first connection edge 24c extends obliquely relative to the longitudinal direction of the current collector 22. Thus, wrinkle formation in the uncoated portion can be reduced.

## Description

### [Technical Field]

The present disclosure relates to an electrode plate for power storage device use and a power storage device.

### [Background Art]

There is a known conventional electrode plate for power storage device use that is used for a power storage device such as a secondary battery (e.g., Patent Literature 1). The electrode plate for power storage device use of Patent Literature 1 includes a substantially rectangular current collector and an active material layer provided on at least one surface of the current collector. The at least one surface has an uncoated portion (plain portion) that is located at one end in the widthwise direction of the current collector in a specific region in the longitudinal direction thereof, and on which the active material layer is not provided. The uncoated portion has an outer edge coinciding with a part of the outer edge of the current collector, two widthwise extending edges that are connected to the end points of the outer edge, and an inner edge that connects the two widthwise extending edges.

### [Citation List]

### [Patent Literature]

[Patent Literature 1] Japanese Laid-Open Patent Publication No. 2018-206465

### [Summary of the invention]

### [Technical Problem]

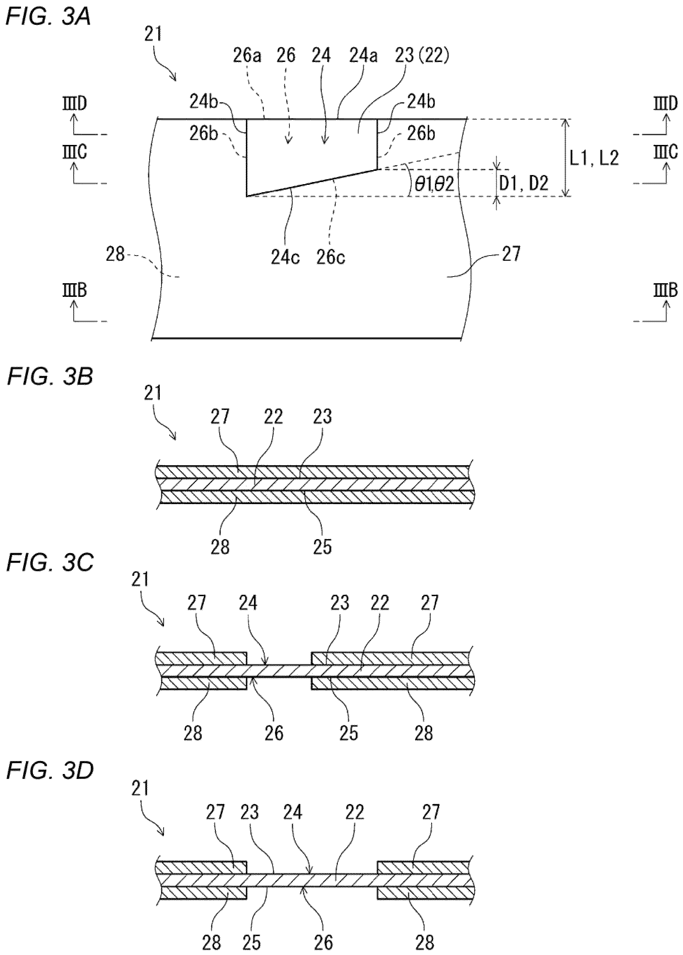

As illustrated in, for example, FIG. 3 of Patent Literature 1, the active material layer is adjacent to the inner edge of the uncoated portion. In a step of compressing the active material layer in the longitudinal direction of the current collector, a difference in elongation occurs between the uncoated portion and the active material layer adjacent thereto, which may form wrinkles in the uncoated portion. Once wrinkles are formed in the uncoated portion, it becomes difficult to properly attach an electrode tab to the uncoated portion. In order to avoid such a situation, one object of the present disclosure is to reduce wrinkle formation in the uncoated portion.

### [Solution to Problem]

One aspect of the present disclosure relates to an electrode plate for power storage device use. The electrode plate for power storage device use includes a current collector in an elongated sheet-like shape having a first main surface and a second main surface; and a first active material layer provided on the first main surface, wherein the first main surface has at least one first uncoated portion that is located at one end of the current collector in a widthwise direction and on which the first active material layer is not provided, the first uncoated portion has a first longitudinal edge coinciding with a part of an outer edge of the current collector, paired first widthwise edges extending in the widthwise direction from endpoints of the first longitudinal edge, and a first connection edge connecting endpoints of the paired first widthwise edges, and half or more of the first connection edge extends obliquely relative to a longitudinal direction of the current collector.

Another aspect of the present disclosure relates to a power storage device. The power storage device includes an electrode body constituted by a first electrode plate and the second electrode plate wound with a separator therebetween; a case in a bottomed cylindrical shape that accommodates the electrode body and that has an opening at one end thereof; and a sealing body that seals the opening of the case, wherein the first electrode plate is the electrode plate for power storage device use according to any one of claims 1 to 4, and the power storage device further comprises a first electrode tab attached to the first uncoated portion to electrically connect the first electrode plate and the sealing body.

### [Advantageous Effect of Invention]

According to the present disclosure, wrinkle formation in the uncoated portion can be reduced.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

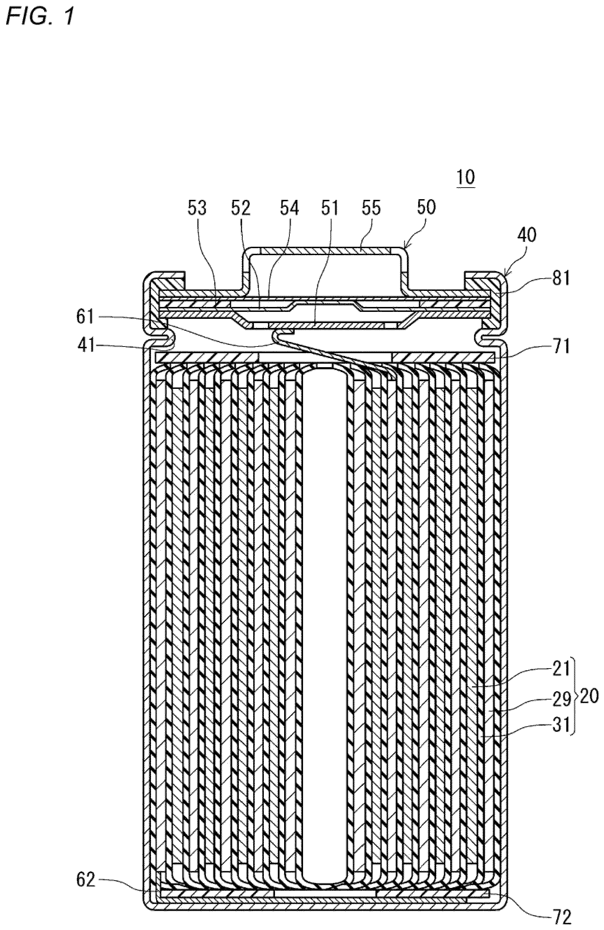

[FIG. 1] FIG. 1 is a schematic longitudinal cross-sectional view of a power storage device of a first embodiment.

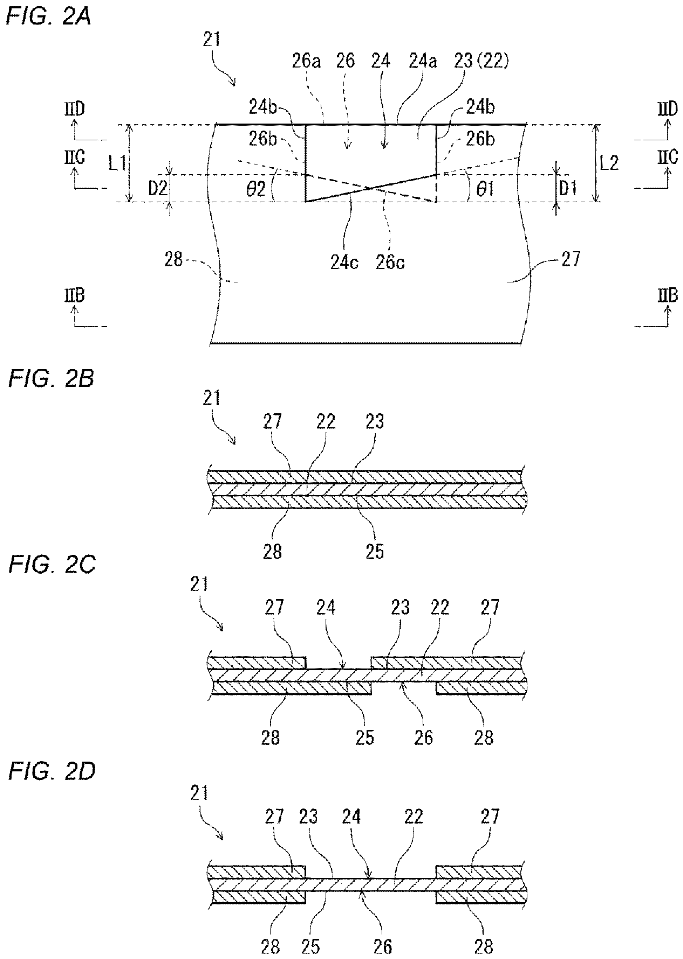

[FIGS. 2A to 2D] FIGS. 2A to 2D are diagrams illustrating the periphery of an uncoated portion of a positive electrode plate of the first embodiment, wherein FIG. 2A is a front view, FIG. 2B is a cross-sectional view taken along a line IIB-IIB, FIG. 2C is a cross-sectional view taken along a line IIC-IIC, and FIG. 2D is a cross-sectional view taken along a line IID-IID.
[FIGS. 3Ato 3D] FIGS. 3A to 3D are views illustrating the periphery of an uncoated portion of a positive electrode plate of a second embodiment, wherein FIG. 3A is a front view, FIG. 3B is a cross-sectional view taken along a line IIIB-IIIB, FIG. 3C is a cross-sectional view taken along a line IIIC-IIIC, and FIG. 3D is a cross-sectional view taken along a line IIID-IIID.

### [Description of Embodiments]

Embodiments of an electrode plate for power storage device use and a power storage device according to the present disclosure are described below by way of example. However, the present disclosure is not limited to the examples described below. In the following description, specific numerical values and materials may be exemplified in some cases, but other numerical values and other materials may be adopted as long as the effects of the present disclosure can be obtained.

### (Electrode Plate for Power Storage Device Use)

The electrode plate for power storage device use according to the present disclosure can be used as a positive electrode plate or a negative electrode plate of a power storage device. The electrode plate for power storage device use according to the present disclosure includes a current collector and a first active material layer. The type of the power storage device is not limited particularly. However, a case of a lithium-ion secondary battery is mainly described below as an example.

The current collector is formed in an elongated sheet shape and has a first main surface and a second main surface. When used as a positive electrode current collector of a lithium-ion secondary battery, the current collector may be constituted by an aluminum foil or an aluminum alloy foil. When used as a negative electrode current collector of a lithium-ion secondary battery, the current collector may be constituted by a copper foil or a copper alloy foil.

The first active material layer is provided on the first main surface. The first active material layer, when it serves as a positive electrode active material layer of a lithium-ion secondary battery, may contain a positive electrode active material (e.g., a lithium-containing transition metal oxide), a conductive agent, and a binder, for example. The first active material layer, when it serves as a negative electrode active material layer of a lithium-ion secondary battery, may contain a negative electrode active material (e.g., a carbonaceous material and a silicon-containing material), a conductive agent, and a binder, for example.

The first main surface of the current collector has at least one first uncoated portion. The first uncoated portion is an area on which the first active material layer is not provided, and that is located at one end of the current collector in the widthwise direction. The first uncoated portion can also be said to be an area where the first main surface of the current collector is exposed. The first uncoated portion may be formed by intermittently applying a paste-like active material slurry to the first main surface.

The first uncoated portion has a first longitudinal edge, paired first widthwise edges, and a first connection edge. The first longitudinal edge coincides with a part of the outer edge of the current collector (outer edge of the current collector extending in its longitudinal direction). The paired first widthwise edges extend in the widthwise direction of the current collector from the endpoints of the first longitudinal edge. The paired first widthwise edges may be different in length from each other. The first connection edge connects the endpoints of the paired first widthwise edges. The first connection edge may extend linearly or non-linearly (e.g., arcuate or curved).

Half or more (or 50% or more) of the first connection edge extends obliquely relative to the longitudinal direction of the current collector. Here, the step of forming the first active material layer includes a step of compressing (e.g., a rolling roll may be used) the first active material layer in the longitudinal direction of the current collector. If almost the entirety of the first connection edge extends in the longitudinal direction of the current collector, strain due to the difference in elongation between the first uncoated portion and the first active material layer is accumulated in this compression step, which may result in wrinkle formation in the first uncoated portion. By contrast, more than half of the first connection edge extends obliquely relative to the longitudinal direction of the current collector in the present disclosure, which disperses strain caused due to the difference in the elongation, with a result that wrinkles are hardly formed in the first uncoated portion. The first connection edge may extend obliquely relative to the longitudinal direction of the current collector by 60% or more, 70% or more, 80% or more, or 90% or more.

The electrode plate for power storage device use may further include a second active material layer provided on the second main surface. The second main surface may have at least one second uncoated portion that is located on the back side of the first uncoated portion and on which the first active material layer is not provided. The second uncoated portion may have a second longitudinal edge coinciding with a part of the outer edge of the current collector, paired second widthwise edges extending in the widthwise direction from the endpoints of the second longitudinal edge, and a second connection edge connecting the endpoints of the paired second widthwise edges. Half or more of the second connection edge may extend obliquely relative to the longitudinal direction. The composition of the second active material layer may be the same as or different from the composition of the first active material layer. The paired second widthwise edges may be different in length from each other. The second connection edge may extend linearly or non-linearly (e.g., arcuate or curved). In also this configuration, wrinkle formation in the second uncoated portion can be reduced as in the first uncoated portion.

The inclined direction of the first connection edge and the inclined direction of the second connection edge may be opposite to each other. In the present description, the inclined directions of the connection edges each are an inclined direction when viewed from the side of the first main surface of the current collector. The first connection edge and the second connection edge may intersect with each other when viewed in the normal direction of the first main surface. The first connection edge and the second connection edge such as above can be formed by making the application direction of an active material slurry for first active material layer formation and the application direction of an active material slurry for second active material layer formation opposite to each other. In the above configuration, strain in the first uncoated portion and strain in the second uncoated portion are not accumulated in a superimposed manner in the step of compressing the respective active material layers. It is accordingly possible to further reduce wrinkle formation in each uncoated portion.

The inclined direction of the first connection edge and the inclined direction of the second connection edge may be the same as each other. The first connection edge may overlap with the second connection edge at least partially when viewed in the normal direction of the first main surface, or may be entirely shifted from each other. The first connection edge and the second connection edge such as above can be formed by simultaneously applying an active material slurry for first active material layer formation and an active material slurry for second active material layer formation. With this configuration, the electrode plate for power storage device use according to the present disclosure can be efficiently produced.

One of the endpoints of the first widthwise edges and the other one of the endpoints of the first widthwise edges may be arranged to be shifted from each other in the widthwise direction of the current collector. Given that L1 [mm] represents the maximum dimension of the first uncoated portion in the widthwise direction of the current collector, and D1 [mm] represents the distance between one of the endpoints of the first widthwise edges and the other one of the endpoints of the first widthwise edges in the widthwise direction of the current collector, 0.025 ≤ D1/L1 ≤ 0.17 may be met. As a result of 0.025 ≤ D1/L1 being met, wrinkle formation in the first uncoated portion can be effectively reduced. As a result of D1/L1 ≤ 0.17 being met, a capacity expression function of the electrode plate for power storage device use can be maintained high.

The inclination angle of the first connection edge relative to the longitudinal direction of the current collector may be 0.5° or more and 35° or less. In the present description, the inclination angle of the first connection edge (or the second connection edge) refers to an angle (acute angle) formed between a straight line connecting a pair of connection points between the paired first widthwise edges and the first connection edge and a straight line extending in the longitudinal direction of the current collector. As a result of the inclination angle being 0.5° or more, wrinkle formation in the first uncoated portion can be effectively reduced. As a result of the inclination angle being 35° or less, the capacity expression function of the electrode plate for power storage device use can be maintained high.

The inclination angle of the second connection edge relative to the longitudinal direction of the current collector may be 0.5° or more and 35° or less. As a result of the inclination angle being 0.5° or more, wrinkle formation in the second uncoated portion can be effectively reduced. As a result of the inclination angle being 35° or less, the capacity expression function of the electrode plate for power storage device use can be maintained high.

The inclination angle of the first connection edge relative to the longitudinal direction of the current collector and the inclination angle of the second connection edge relative to the longitudinal direction of the current collector may be the same as or different from each other.

### (Power Storage Device)

The power storage device according to the present disclosure may be a battery or a capacitor. The battery may be a primary battery such as a lithium primary battery, or may be a nonaqueous electrolyte secondary battery such as an alkaline storage battery (e.g., nickel-hydride battery or nickel-cadmium battery), a lithium-ion secondary battery, a lithium metal secondary battery, or an all-solid-state battery. The power storage device according to the present disclosure includes an electrode body, a case, a sealing body, and a first electrode tab.

The electrode body is formed of a first electrode plate and a second electrode plate wound with a separator therebetween. The outer shape of the electrode body may be a cylindrical shape or a prismatic shape, for example. One of the first electrode plate and the second electrode plate is a positive electrode plate, and the other of the first electrode plate and the second electrode plate is a negative electrode plate. The first electrode plate is the electrode plate for power storage device use according to the present disclosure. The separator may be constituted by a porous sheet having ion permeability and insulating properties. Examples of the porous sheet include thin films having micropores, woven fabrics, and nonwoven fabrics.

The case is formed in a bottomed cylindrical shape having an opening at its one end, and accommodates the electrode body. The case may have a bottomed cylindrical shape or a bottomed prismatic shape, for example. The case may be constituted by an electric conductor (e.g., metal). The case may be electrically connected to the second electrode plate of the electrode body. In this case, the case functions as one of external terminals of the power storage device.

The sealing body seals the opening of the case. At least a parr of the sealing body is constituted by an electric conductor (e.g., metal). The outer shape of the sealing body may be a disk shape or a rectangular plate shape, for example. The sealing body may include an explosion-proof mechanism that operates upon the internal pressure of the case exceeding a predetermined value.

The first electrode tab is attached to the first uncoated portion of the first electrode plate. The first electrode tab may be constituted by an electric conductor (e.g., metal). The first electrode tab electrically connects the first electrode plate and the sealing body. In the above configuration, the sealing body functions as another external terminal of the power storage device. The one first electrode plate may have two or more first uncoated portions, or may have three or more first uncoated portions. The number of the first electrode tabs may be the same as the number of the first uncoated portions. That is, the first electrode plate may be a multi-tab type electrode plate.

As described above, according to the present disclosure, since half or more of the first connection edge extends obliquely relative to the longitudinal direction of the current collector (direction in which the first active material layer is compressed), wrinkle formation in the first uncoated portion can be reduced.

Hereinafter, examples of the electrode plate for power storage device use and the power storage device according to the present disclosure will be specifically described with reference to the accompanying drawings. The above-described elements of configuration are applicable to the elements of configuration of the electrode plate for the power storage device use and the power storage device in the examples described below. The elements of configuration of the electrode plate for power storage device use and the power storage device described below can be altered based on the above description. Further, the matters described below may be applied to the above-described embodiments. Among the elements of configuration of the electrode plate for power storage device use and the power storage device described below, any elements of configuration that are not essential to the electrode plate for power storage device use or the power storage device according to the present disclosure may be omitted. It should be noted that the drawings indicated below are schematic and do not accurately reflect the shape or number of actual members.

### <<First Embodiment>>

The following describes a first embodiment of the present disclosure. A power storage device 10 of the present embodiment is configured as, but is not limited to, a lithium-ion secondary battery. As illustrated in FIG. 1, the power storage device 10 includes an electrode body 20, a case 40, a sealing body 50, a positive electrode tab 61, and a negative electrode tab 62.

The electrode body 20 includes a positive electrode plate 21, a negative electrode plate 29, and a separator 31. Each of the positive electrode plate 21, the negative electrode plate 29, and the separator 31 has an elongated sheet shape (or a band shape). The elongated sheet-shaped positive electrode plate 21 and the elongated sheet-shaped negative electrode plate 29 are spirally wound with the separator 31 therebetween so that the widthwise directions of the positive electrode plate 21 and the negative electrode plate 29 are parallel to the winding axis. A first insulating plate 71 and a second insulating plate 72 are provided on the opposite sides of the electrode body 20 in the axial direction. The positive electrode plate 21 is an example of the first electrode plate, and the negative electrode plate 29 is an example of the second electrode plate. The configuration of the positive electrode plate 21 will be described later in detail.

The case 40 is formed in a bottomed cylindrical shape having an opening at its one end (an upper end in FIG. 1). The case 40 accommodates the electrode body 20 and an electrolyte (not illustrated). The case 40 has a stepped portion 41 formed by partially pressing the side wall of the case 40 from the outside. The stepped portion 41 may be formed on the side wall of the case 40 annually in the circumferential direction of the case 40. In this case, the sealing body 50 may be supported on the surface of the stepped portion 41 on the opening side.

The sealing body 50 seals the opening of the case 40. An insulative gasket 81 is provided between the sealing body 50 and the case 40, thereby ensuring sealing properties of the case 40. The sealing body 50 includes a filter 51, a lower valve body 52, an insulating member 53, an upper valve body 54, and a cap 55. In the sealing body 50, these members are stacked in the stated order. The sealing body 50 is attached to the opening of the case 40 such that the cap 55 is located outside the case 40 and the filter 51 is located inside the case 40. Each of the above-described members constituting the sealing body 50 has a disk shape or a ring shape, for example. The members except the insulating member 53 are electrically connected to each other.

The positive electrode tab 61 is attached to a first uncoated portion 24 (described later) of the positive electrode plate 21 to electrically connect the positive electrode plate 21 and the sealing body 50. Specifically, one end of the positive electrode tab 61 is connected to the first uncoated portion 24, and the other end thereof is connected to the cap 55 of the sealing body 50. The positive electrode tab 61 passes through a through hole formed in the first insulating plate 71. In the above configuration, the cap 55 of the sealing body 50 functions as an external positive electrode terminal. Only one positive electrode tab 61 may be provided, or a plurality of positive electrode tabs 61 may be provided. The positive electrode tab 61 is an example of the first electrode tab.

The negative electrode tab 62 is attached to the negative electrode plate 29 to electrically connect the negative electrode plate 29 and the case 40. Specifically, one end of the negative electrode tab 62 is connected to the negative electrode plate 29, and the other end thereof is connected to the inner bottom surface of the case 40. In the above configuration, the case 40 functions as an external negative electrode terminal. Only one negative electrode tab 62 may be provided, or a plurality of negative electrode tabs 62 may be provided.

The configuration of the positive electrode plate 21 will be described next in detail with reference to FIGS. 2Ato 2D.

As illustrated in FIGS. 2A to 2D, the positive electrode plate 21 includes a current collector 22 in an elongated sheet-like shape having a first main surface 23 and a second main surface 25, a first active material layer 27 provided on the first main surface 23, and a second active material layer 28 provided on the second main surface.

The current collector 22 is constituted by an aluminum foil or an aluminum alloy foil, for example. The longitudinal direction of the current collector 22 corresponds to the transverse direction in FIG. 2A, and the widthwise direction of the current collector 22 corresponds to the vertical direction in FIG. 2A. The longitudinal direction of the current collector 22 matches the winding direction of the electrode body 20, and the widthwise direction of the current collector 22 matches the axial direction of the electrode body 20.

The first active material layer 27 contains a lithium-containing transition metal oxide, a conductive agent, and a binder, for example. The second active material layer 28 has the same composition as the first active material layer 27, for example.

The first main surface 23 of the current collector 22 has a first uncoated portion 24 that is located at one end (upper end in FIG. 2A) of the current collector 22 in the widthwise direction and on which the first active material layer 27 is not provided. Only one first uncoated portion 24 may be provided, or a plurality of first uncoated portions 24 may be provided. The first uncoated portion 24 has a first longitudinal edge 24a coinciding with a part of the outer edge of the current collector 22, paired first widthwise edges 24b extending in the widthwise direction from the endpoints of the first longitudinal edge 24a, and a first connection edge 24c connecting the endpoints of the first widthwise edges 24b. Half or more of the first connection edge 24c extends obliquely relative to the longitudinal direction of the current collector 22. An inclination angle θ1 of the first connection edge 24c relative to the longitudinal direction is 0.5° or more and 35° or less.

One of the endpoints of the first widthwise edges 24b and the other one of the endpoints of the first widthwise edges 24b are arranged to be shifted from each other in the widthwise direction of the current collector 22. Given that L1 [mm] represents the maximum dimension of the first uncoated portion 24 in the widthwise direction, and D1 [mm] represents the distance between one of the endpoints of the first widthwise edges 24b and the other one of the endpoints of the first widthwise edges 24b, 0.025 ≤ D1/L1 ≤ 0.17 is met.

The second main surface 25 of the current collector 22 has a second uncoated portion 26 that is located on the back side of the first uncoated portion 24 and on which the second active material layer 28 is not provided. The second uncoated portion 26 may have the same number as the first uncoated portion 24. The second uncoated portion 26 has a second longitudinal edge 26a coinciding with a part of the outer edge of the current collector 22, paired second widthwise edges 26b extending in the widthwise direction from the endpoints of the second longitudinal edge 26a, and a second connection edge 26c connecting the endpoints of the second widthwise edges 26b. Half or more of the second connection edge 26c extends obliquely relative to the longitudinal direction of the current collector 22. An inclination angle θ2 of the second connection edge 26c relative to the longitudinal direction is 0.5° or more and 35° or less.

One of the endpoints of the second widthwise edges 26b and the other one of the endpoints of the second widthwise edges 26b are arranged to be shifted from each other in the widthwise direction of the current collector 22. Given that L2 [mm] represents the maximum dimension of the second uncoated portion 26 in the widthwise direction, and D2 [mm] represents the distance between one of the endpoints of the second widthwise edges 26b and the other one of the endpoints of the second widthwise edges, 26b, 0.04 ≤ D2/L2 ≤ 0.25 is met.

In the present embodiment, the inclined direction of the first connection edge 24c and the inclined direction of the second connection edge 26c are opposite to each other. The first connection edge 24c and the second connection edge 26c intersect each other when viewed in the normal direction of the first main surface 23.

### <Second Embodiment 2>

Description will be made below of a second embodiment of the present disclosure. The configuration of the positive electrode plate 21 of a power storage device 10 of the present embodiment is different from that in the first embodiment. Hereinafter, differences from the first embodiment will be mainly described.

As illustrated in FIG. 3, the inclined direction of the first connection edge 24c and the inclined direction of the second connection edge 26c are the same as each other in the present embodiment. The first connection edge 24c overlaps with the second connection edge 26c when viewed in the normal direction of the first main surface 23, but the present invention is not limited thereto.

### <Supplemental Remarks>

According to the above description of the embodiments, the following techniques are disclosed.

### (Technique 1)

An electrode plate for power storage device use, including a current collector in an elongated sheet-like shape having a first main surface and a second main surface; and
a first active material layer provided on the first main surface, wherein
the first main surface has at least one first uncoated portion that is located at one end of the current collector in a widthwise direction and on which the first active material layer is not provided,
the first uncoated portion has a first longitudinal edge coinciding with a part of an outer edge of the current collector, paired first widthwise edges extending in the widthwise direction from endpoints of the first longitudinal edge, and a first connection edge connecting endpoints of the paired first widthwise edges, and
half or more of the first connection edge extends obliquely relative to a longitudinal direction of the current collector.

### (Technique 2)

The electrode plate for power storage device use according to Technique 1, further including a second active material layer provided on the second main surface, wherein
the second main surface has at least one second uncoated portion that is located on a back side of the first uncoated portion and on which the second active material layer is not provided,
the second uncoated portion has a second longitudinal edge coinciding with a part of the outer edge of the current collector, paired second widthwise edges extending in the widthwise direction from endpoints of the second longitudinal edge, and a second connection edge connecting endpoints of the paired second widthwise edges, and
half or more of the second connection edge extends obliquely relative to the longitudinal direction.

### (Technique 3)

The electrode plate for power storage device use according to Technique 2, wherein
an inclined direction of the first connection edge and an inclined direction of the second connection edge are opposite to each other.

### (Technique 4)

The electrode plate for power storage device use according to Technique 2, wherein
an inclined direction of the first connection edge and an inclined direction of the second connection edge are the same as each other.

### (Technique 5)

The electrode plate for power storage device use according to any one of Techniques 1 to 4, wherein
one of the endpoints of the first widthwi se edges and another one of the endpoints of the first widthwise edges are arranged to be shifted from each other in the widthwise direction, and
given that L1 [mm] represents a maximum dimension of the first uncoated portion in the widthwise direction, and D1 [mm] represents a distance between one of the endpoints of the first widthwise edges and the other one of the endpoints of the first widthwise edges, 0.025 ≤ D1/L1 ≤ 0.17 is met.

### (Technique 6)

The electrode plate for power storage device use according to any one of Techniques 1 to 5, wherein
an inclination angle of the first connection edge relative to the longitudinal direction is 0.5° or more and 35° or less.

### (Technique 7)

A power storage device including: an electrode body constituted by a first electrode plate and the second electrode plate wound with a separator therebetween;
a case in a bottomed cylindrical shape that accommodates the electrode body and that has an opening at one end thereof; and
a sealing body that seals the opening of the case, wherein
the first electrode plate is the electrode plate for power storage device use according to any one of Techniques 1 to 4, and
the power storage device further comprises a first electrode tab attached to the first uncoated portion to electrically connect the first electrode plate and the sealing body.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure is applicable to electrode plates for power storage device use and power storage devices.

### [Reference Signs List]

10: power storage device
   20: electrode body
      21: positive electrode plate (first electrode plate)
         22: current collector
            23: first main surface
               24: first uncoated portion
               24a: first longitudinal edge
               24b: first widthwise edge
               24c: first connection edge
            25: second main surface
               26: second uncoated portion
               26a: second longitudinal edge
               26b: second widthwise edge
               26c: second connection edge
         27: first active material layer
         28: second active material layer
      29: negative electrode plate (second electrode plate)
      31: separator
   40: case
      41: stepped portion
   50: sealing body
      51: filter
      52: lower valve body
      53: insulating member
      54: upper valve body
      55: cap
   61: positive electrode tab (first electrode tab)
   62: negative electrode tab
   71: first insulating plate
   72: second insulating plate
   81: gasket
D1: dimensional difference between paired first widthwise edges
D2: dimensional difference between paired second widthwise edges
L1: maximum dimension of first uncoated portion
L2: maximum dimension of second uncoated portion
θ1: inclination angle of first connection edge
θ2: inclination angle of second connection edge

## Claims

1. An electrode plate for power storage device use, comprising:
a current collector in an elongated sheet-like shape having a first main surface and a second main surface; and
a first active material layer provided on the first main surface, wherein
the first main surface has at least one first uncoated portion that is located at one end of the current collector in a widthwise direction and on which the first active material layer is not provided,
the first uncoated portion has a first longitudinal edge coinciding with a part of an outer edge of the current collector, paired first widthwise edges extending in the widthwise direction from endpoints of the first longitudinal edge, and a first connection edge connecting endpoints of the paired first widthwise edges, and
half or more of the first connection edge extends obliquely relative to a longitudinal direction of the current collector.

2. The electrode plate for power storage device use according to claim 1, further comprising
a second active material layer provided on the second main surface, wherein
the second main surface has at least one second uncoated portion that is located on a back side of the first uncoated portion and on which the second active material layer is not provided,
the second uncoated portion has a second longitudinal edge coinciding with a part of the outer edge of the current collector, paired second widthwise edges extending in the widthwise direction from endpoints of the second longitudinal edge, and a second connection edge connecting endpoints of the paired second widthwise edges, and
half or more of the second connection edge extends obliquely relative to the longitudinal direction.

3. The electrode plate for power storage device use according to claim 2, wherein
an inclined direction of the first connection edge and an inclined direction of the second connection edge are opposite to each other.

4. The electrode plate for power storage device use according to claim 2, wherein
an inclined direction of the first connection edge and an inclined direction of the second connection edge are the same as each other.

5. The electrode plate for power storage device use according to any of claims 1 to 4, wherein
one of the endpoints of the first widthwise edges and another one of the endpoints of the first widthwise edges are arranged to be shifted from each other in the widthwise direction, and
given that L1 [mm] represents a maximum dimension of the first uncoated portion in the widthwise direction, and D1 [mm] represents a distance between one of the endpoints of the first widthwise edges and the other one of the endpoints of the first widthwise edges, 0.025 ≤ D1/L1 ≤ 0.17 is met.

6. The electrode plate for power storage device use according to any one of claims 1 to 4, wherein
an inclination angle of the first connection edge relative to the longitudinal direction is 0.5° or more and 35° or less.

7. A power storage device comprising:
an electrode body constituted by a first electrode plate and the second electrode plate wound with a separator therebetween;
a case in a bottomed cylindrical shape that accommodates the electrode body and that has an opening at one end thereof; and
a sealing body that seals the opening of the case, wherein
the first electrode plate is the electrode plate for power storage device use according to any one of claims 1 to 4, and
the power storage device further comprises a first electrode tab attached to the first uncoated portion to electrically connect the first electrode plate and the sealing body.
